# EUROPEAN PATENT APPLICATION

(11) **EP 4 792 643 A1**
(43) Date of publication of application: **19.08.2026**
(21) Application number: 25864501.9
(22) Date of filing: 11.09.2025
(51) Int. Cl.: A01K 1/01

(54) **ROLLING SUPPORT DRIVING MECHANISM AND PET EXCRETA COLLECTION DEVICE**

(30) Priority: 22.11.2024 CN 202422853734 U
(71) Applicant: PETKIT NETWORK TECHNOLOGY (SHANGHAI) CO., LTD., Shanghai 201100 (CN)
(72) Inventor: XIE, Chao, Shanghai 201100 (CN); LIU, Guojun, Shanghai 201100 (CN); JIANG, Lihua, Shanghai 201100 (CN); MA, Xiaoqing, Shanghai 201100 (CN); ZHANG, Junchao, Shanghai 201100 (CN)
(74) Representative: Cabinet Beaumont
(86) International application number: PCT/CN2025/120686
(87) International publication number: WO 2026/108346

(57) **Abstract**

Provided are a pet waste collection device and a rolling support drive mechanism including a rolling support assembly and a drive assembly. The rolling support assemblies are symmetrically distributed on two sides of a cat litter box. The rolling support assembly includes a connection member, a lower rolling support member, and a guide member. The lower rolling support member is disposed at the bottom end of the connection member and is in rolling engagement with a bottom plate. The guide members are symmetrically arranged along the two sides of the litter box, connected to the connection member and configured to guide the rolling support assemblies to reciprocate along the two sides of the cat litter box. Output ends of the drive assemblies are connected to the rolling support assemblies to drive the rolling support assemblies to reciprocate along the two sides of the cat litter box.

## Description

The present application claims priority to Chinese Patent Application No. 202422853734.6, filed with the China National Intellectual Property Administration (CNIPA) on Nov. 22, 2024, the disclosure of which is incorporated herein by reference in its entirety.

### TECHNICAL FIELD

The present application relates to the technical field of cat litter boxes, for example, a rolling support drive mechanism and a pet waste collection device.

### BACKGROUND

A cat litter box is a special container that provides an excretion space for cats and is an essential item in a cat's daily life. The cat litter box is mainly used to hold cat litter, thereby allowing cats to perform their natural behavior of burying excrement. After a cat excretes, the feces combine with the cat litter to form clumps. To facilitate cleaning, the clumps are typically separated from clean cat litter by manual screening using a tool such as a sieve or a slotted scoop. Although these methods can achieve basic cleaning of the feces, the manual operation is time-consuming and labor-intensive, and may not completely remove the fecal clumps.

As shown in FIG. 1, Chinese Utility Model Patent No. CN221634695U discloses a bidirectional pet waste collection device. The bidirectional pet waste collection device includes a cat litter box 1, a waste collection bin 2, and a grid 3. The grid 3 is disposed at the top end of the cat litter box 1 and is inserted into the cat litter. The grid 3 may reciprocate within the cat litter box 1 to collect cat litter clumps into either one or both of the waste collection bins 2, thereby avoiding the occurrence of blind spots in collecting the cat litter clumps that may arise when the grid 3 moves in a single direction only once, and enabling more thorough cleaning of the cat litter clumps. However, since a drive block is in direct contact with the main body of the cat litter box 1, mutual sliding friction exists between the drive block and the cat litter box 1 during operation of the device. This friction not only generates a relatively large frictional force, which increases energy consumption, but also produces noise and hinders flexible reversing of the grid 3, thereby affecting the operational performance and the usage experience of the overall device.

### SUMMARY

The present application provides a rolling support drive mechanism and a pet waste collection device, which can not only reduce the frictional force between the drive mechanism and a main body of a cat litter box, but also avoid frictional noise and improve the flexible reversing of a grid, thereby enhancing the operational performance and the usage experience of the overall device.

An embodiment of the present application provides a rolling support drive mechanism, wherein each of two ends of a cat litter box is provided with a waste collection bin, a grid is located at a top end of the cat litter box and is inserted into the cat litter box, upper limit plates are respectively located outside two sides of the cat litter box, and the rolling support drive mechanism is located between the upper limit plates and a bottom plate of the cat litter box and is configured to drive the grid to reciprocate between waste collection bins at the two ends of the cat litter box. The rolling support drive mechanism includes rolling support assemblies and drive assemblies. The rolling support assemblies are symmetrically distributed on the two sides of the cat litter box, a rolling support assembly of the rolling support assemblies includes a connection member, a lower rolling support member, and a guide member, the lower rolling support member is disposed at a bottom end of the connection member and is in rolling engagement with the bottom plate, guide members are symmetrically arranged along the two sides of the cat litter box, the guide member is connected to the connection member, and the guide members are configured to guide the rolling support assemblies to reciprocate along the two sides of the cat litter box. Output ends of the drive assemblies are connected to the rolling support assemblies to drive the rolling support assemblies to reciprocate along the two sides of the cat litter box.

In an embodiment, the lower rolling support member includes a roller, a protrusion is disposed on the connection member, the roller is rotatably sleeved on the protrusion, the roller is configured to be in rolling engagement with the bottom plate, and rollers are configured to reciprocate along the two sides of the cat litter box.

In an embodiment, the lower rolling support member further includes a retainer ring, and the retainer ring is disposed at an end of the protrusion facing away from the connection member to prevent the roller from slipping off.

In an embodiment, the guide member includes a guide rod, guide rods are symmetrically disposed outside the two sides of the cat litter box, and the guide rod is configured to pass through the connection member and is slidably connected to the connection member.

In an embodiment, the guide member includes a guide rail, guide rails are symmetrically disposed at a bottom of the cat litter box along outside of the two sides of the cat litter box, and the lower rolling support member is configured to roll along the guide rail.

Further, a rolling support assembly of the rolling support assemblies further includes an upper rolling support member, and the upper rolling support member is disposed at a top end of the connection member and is in sliding engagement with a respective upper limit plate of the upper limit plates.

In an embodiment, a rolling support assembly of the rolling support assemblies further includes an auxiliary support member, the auxiliary support member is disposed between the upper rolling support member and the lower rolling support member and the auxiliary support member is connected to a side wall of the cat litter box and the connection member, to share a load of the lower rolling support member.

In an embodiment, the auxiliary support member includes a support protrusion, the support protrusion is disposed on one of the side wall of the cat litter box and the connection member and is disposed along a direction of reciprocation of the rolling support assemblies, a support groove is disposed on the other of the side wall of the cat litter box and the connection member, and the support protrusion is in sliding engagement with the support groove.

In an embodiment, a drive assembly of the drive assemblies includes a drive motor and a transmission member. An output end of the drive motor is connected to the transmission member, and the transmission member is connected to the connection member to drive the rolling support assemblies to reciprocate along the two sides of the cat litter box.

An embodiment of the present application further provides a pet waste collection device. The pet waste collection device includes a connection rod and the rolling support drive mechanism according to any one of the preceding contents. One end of the connection rod is rotatably connected to the connection member, and another end of the connection rod is rotatably connected to the grid.

### BRIEF DESCRIPTION OF THE DRAWINGS

FIG. 1 is a schematic structural diagram of a pet waste collection device in the related art;
FIG. 2 is a schematic structural diagram of a pet waste collection device according to the present application; and
FIG. 3 is a schematic structural diagram of a rolling support drive mechanism according to the present application.

### List of reference numbers

- 1: cat litter box
- 2: waste collection bin
- 3: grid
- 4: upper limit plate
- 5: bottom plate
- 6: rolling support assembly
- 61: connection member
- 611: protrusion
- 62: lower rolling support member
- 621: roller
- 622: retainer ring
- 63: guide member
- 631: guide rod
- 632: guide rail
- 64: upper rolling support member
- 65: auxiliary support member
- 7: drive assembly
- 71: drive motor
- 72: transmission member
- 8: connection rod

### DETAILED DESCRIPTION

The present application is described below in conjunction with drawings and embodiments. Embodiments described herein are merely intended to explain the present application and not to limit the present application. For ease of description, only part, not all, of the structures related to the present application are illustrated in the drawings.

In the description of the present application, unless otherwise expressly specified and limited, the term "connected to each other", "connected", or "fixed" is to be construed in a broad sense, for example, as fixedly connected, detachably connected, or integrated; mechanically connected or electrically connected; directly connected to each other, indirectly connected to each other via an intermediary, internally connected between two elements, or an interaction relation between two elements. For those of ordinary skill in the art, the meanings of the preceding terms in the present application may be understood based on situations.

In the present application, unless otherwise expressly specified and limited, when a first feature is described as "above" or "below" a second feature, the first feature and the second feature may be in direct contact or be in contact via another feature between the two features. Moreover, when the first feature is described as "on", "above", or "over" the second feature, the first feature is right on, above, or over the second feature or the first feature is obliquely on, above, or over the second feature, or the first feature is simply at a higher level than the second feature. When the first feature is described as "under", "below", or "underneath" the second feature, the first feature is right under, below, or underneath the second feature, or the first feature is obliquely under, below, or underneath the second feature, or the first feature is simply at a lower level than the second feature.

In the description of this embodiment, the orientation or position relationships indicated by terms "above", "below", "left", "right", and the like are based on the orientation or position relationships shown in the drawings, merely for ease of description and simplifying an operation, these relationships do not indicate or imply that the referred device or element has a specific orientation and is constructed and operated in a specific orientation, and thus it is not to be construed as limiting the present application. In addition, the terms "first" and "second" are used only to distinguish between descriptions and have no special meaning.

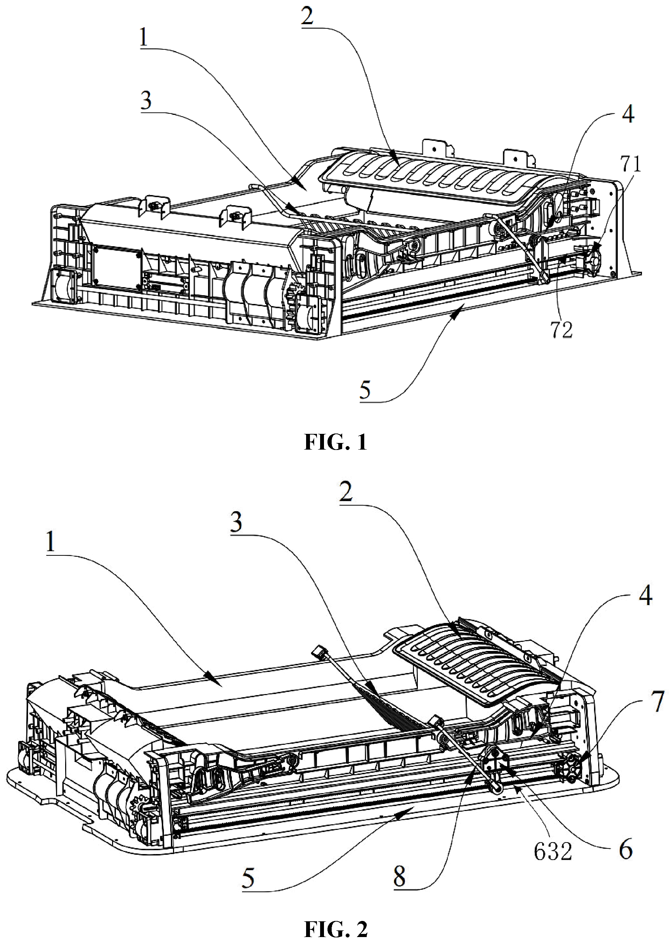

As shown in FIG. 1, in the related art, a drive block of a pet waste collection device is in direct contact with a main body of a cat litter box 1. Mutual sliding friction exists between the drive block and the cat litter box 1 during operation of the device. This friction not only generates a relatively large frictional force, which increases energy consumption, but also produces noise and hinders the flexible reversing of a grid 3, thereby affecting the operational performance and the usage experience of the overall device.

Referring to FIGS. 2 to 3, the present application provides a rolling support drive mechanism, which can not only reduce the frictional force between the drive mechanism and the main body of a cat litter box 1, but also avoid frictional noise and improve the flexible reversing of a grid 3, thereby enhancing the operational performance and the usage experience of the overall device. The rolling support drive mechanism includes rolling support assemblies 6 and drive assemblies 7. Each of two ends of the cat litter box 1 is provided with a waste collection bin 2. The grid 3 is located at the top end of the cat litter box 1 and is inserted into the cat litter box 1. Upper limit plates 4 are respectively located outside two sides of the cat litter box 1. The rolling support drive mechanism is located between the upper limit plates 4 and a bottom plate 5 of the cat litter box 1 and is configured to drive the grid 3 to reciprocate between waste collection bins 2 at the two ends of the cat litter box 1. The rolling support assemblies 6 are symmetrically distributed on the two sides of the cat litter box 1. The rolling support assembly 6 includes a connection member 61, a lower rolling support member 62, and a guide member 63. The lower rolling support member 62 is disposed at the bottom end of the connection member 61 and is in rolling engagement with the bottom plate 5 of the cat litter box 1. The guide members 63 are symmetrically arranged along the two sides of the cat litter box 1. The guide member 63 is connected to the connection member 61. The guide members 63 are configured to guide the rolling support assemblies 6 to reciprocate along the two sides of the cat litter box 1. Output end of the drive assemblies 7 are connected to the rolling support assemblies 6 to drive the rolling support members to reciprocate along the two sides of the cat litter box 1.

The rolling support assembly 6 is in rolling engagement with the bottom plate 5 of the cat litter box 1 through the lower rolling support member 62, so that the rolling support assembly 6 is supported. The contact between the lower rolling support member 62 and the bottom plate 5 of the cat litter box 1 is thereby changed from sliding friction to rolling friction, which significantly reduces the frictional force. This not only reduces the driving load and decreases energy consumption, but also makes the device operate more smoothly and extends the service life of various assemblies of the device, particularly by reducing wear on drive components. Moreover, the introduction of the rolling support assembly 6 reduces frictional noise, thereby making the device quieter compared with drive mechanisms relying on sliding friction. Users are not disturbed by frictional sounds during daily use, thereby improving the usage experience of the user. The guide member 63 is provided so that the rolling support drive mechanism may reciprocate along a predetermined trajectory of the guide member 63 under the drive of the drive assembly 7. The guide member 63 may stably guide the rolling support drive mechanism to drive the grid 3 to reciprocate within the cat litter box 1, thereby making the reversing of the grid 3 more flexible and rapid, avoiding jamming or deviation, and ensuring smooth operation of the device when switching between different directions.

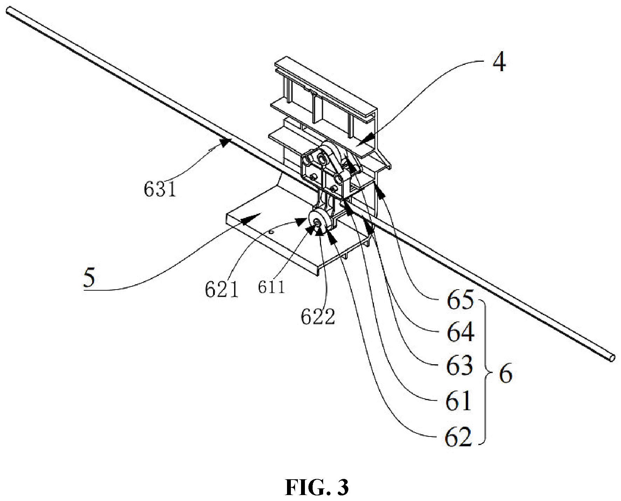

Referring to FIGS. 2 and 3, for ease of assembly, in some embodiments, the lower rolling support member 62 includes a roller 621. A protrusion 611 is disposed on the connection member 61. The roller 621 is rotatably sleeved on the protrusion 611. The roller 621 is configured to be in rolling engagement with the bottom plate 5. The rollers 621 are configured to reciprocate along the two sides of the cat litter box 1. By sleeving the roller 621 on the protrusion 611 of the connection member 61, a direct and simple assembly manner is formed without requiring additional complex fixing structures. The fitting position between the roller 621 and the protrusion 611 is fixed and clear, which helps improve the assembly accuracy, keeps the contact position between the roller 621 and the bottom plate 5 consistent, makes the assembly process more convenient, and saves time and procedures. Moreover, the design of the roller 621 is particularly flexible when reversing at two ends of the guide member 63, thereby enabling a smooth transition without jamming and ensuring the fluency of the entire drive system during reversing. To prevent the roller from falling off, the lower rolling support member 62 further includes a retainer ring 622. The retainer ring 622 is disposed at an end of the protrusion 611 facing away from the connection member 61 to prevent the roller 621 from falling off. The retainer ring 622 may effectively block the roller 621, thereby limiting the roller 621 within a specific range, preventing lateral sliding or deviation of the roller 621 during operation, keeping the roller 621 stably on the protrusion during operation, and ensuring the stability of the roller 621 without easy loosening.

As shown in FIG. 3, to improve the overall operation effect of the device, in some embodiments, the guide member 63 includes a guide rod 631. The guide rods 631 are symmetrically disposed outside the two sides of the cat litter box 1. The guide rod 631 is configured to pass through the connection member 61 and is slidably connected to the connection member 61. The through-type design of the guide rod 631 precisely limits the movement path of the connection member 61, thereby ensuring that the rolling support assembly 6 moves along a specified trajectory, reducing errors in the structure, helping improve the accuracy of the device, and making the reciprocating movement of the grid 3 more precise. Moreover, the through-type guide rod structure is easy to mount. The sliding connection between the guide rod 631 and the connection member 61 not only ensures fixation of the rolling support assembly 6 but also facilitates adjustment of the sliding position of the connection member 61, thereby simplifying the assembly process and making later maintenance or adjustment more convenient.

In other embodiments, the guide member 63 includes a guide rail 632. The guide rails 632 are symmetrically disposed at the bottom of the cat litter box 1 along outside of the two sides of the cat litter box 1, and the lower rolling support member 62 is configured to roll along the guide rail 632. The precise positioning of the guide rail structure makes the movement direction of the lower rolling support member 62 clear, so that the rolling support assembly 6 is made to accurately travel along a specified trajectory, and deviation of the rolling support assembly 6 from the path is avoided, thereby improving the operation accuracy of the device, effectively preventing jamming during reversing, ensuring smooth transition, and enhancing the reversing stability and flexibility of the device.

Referring to FIGS. 2 and 3, in some embodiments, the rolling support assembly 6 further includes an upper rolling support member 64. The upper rolling support member 64 is disposed at a top end of the connection member 61 and is in rolling engagement with the upper limit plate 4. The upper rolling support member 64 is in rolling engagement with the upper limit plate 4 at the top end of the connection member 61, thereby forming an upper and lower dual-support structure, which increases the overall stability of the rolling support assembly 6 within the cat litter box 1, avoids shaking or deviation caused by a single support, reduces friction between upper and lower components, and helps lower operating noise.

Since the lower rolling support member 62 is located at the bottom of the device, it mainly bears the weight of the connection member 61 and the grid 3 above the connection member 61. The weight of these components is transmitted to the bottom plate 5 through the lower rolling support member 62. Moreover, the rolling support assembly 6 drives the grid 3 to reciprocate under the drive of the drive assembly 7, and the lower rolling support member 62 must overcome the frictional force to push the grid 3 to complete cleaning during movement. Therefore, the lower rolling support member 62 needs to bear a certain amount of load. Therefore, as shown in FIG. 3, to improve the supporting force of the rolling support assembly 6 and enhance the overall structural stability, in some embodiments, the rolling support assembly 6 further includes an auxiliary support member 65. The auxiliary support member 65 is disposed between the upper rolling support member 64 and the lower rolling support member 62 and is connected to a side wall of the cat litter box 1 and the connection member 61, so as to share the load of the lower rolling support member 62. The auxiliary support member 65 is located between the upper rolling support member 64 and the lower rolling support member 62, forming a multi-point support structure. The auxiliary support member 65 shares part of the load of the connection member 61 and the grid 3, thereby reducing the pressure on the lower rolling support member 62 and lowering the risk of wear of the lower rolling support member 62 during long-term use. This enables the rolling support drive mechanism to improve the stability in both a perpendicular direction and a lateral direction, reduces shaking and deviation of the rolling support assembly 6 during use of the cat litter box 1, and extends the service life of the device. The auxiliary support member 65 includes a support protrusion. The support protrusion is disposed on one of the side wall of the cat litter box 1 and the connection member 61 and is disposed along a direction of reciprocation of the rolling support assemblies 6. A support groove is disposed on the other of the side wall of the cat litter box 1 and the connection member 61. The support protrusion is in sliding engagement with the support groove. The cooperation between the support protrusion and the support groove forms a precise and stable support system, thereby helping to evenly distribute the load on the lower rolling support member 62 to different components and reducing the burden on the lower rolling support member 62. The auxiliary support member 65 effectively shares the load borne by the lower rolling support member 62 through cooperation with the side wall of the cat litter box 1 and the connection member 61, thereby reducing local pressure concentration. Moreover, the structural design of the support protrusion and the support groove makes the assembly process more convenient. During assembly, the support protrusion and the support groove can be accurately aligned without requiring additional complex fixing structures, thereby reducing errors and time consumption in the assembly process.

To improve drive efficiency, in some embodiments, the drive assembly 7 includes a drive motor 71 and a transmission member 72. An output end of the drive motor 71 is connected to the transmission member 72, and the transmission member 72 is connected to the connection member 61 to drive the rolling support assembly to reciprocate along the two sides of the cat litter box 1. The drive motor 71 provides stable power output, and power transmission through the transmission member 72 can effectively convert the rotational motion of the motor into the reciprocating linear motion required for the rolling support member. This mechanism enables precise speed control, ensures that the movement of the rolling support member along two sides of the cat litter box 1 is stable and consistent, and improves overall work efficiency. The drive motor 71 may be, but is not limited to, a DC drive motor, which is not limited herein. In addition, the transmission member 72 may be, but is not limited to, a ball screw, a worm gear, a belt, or the like, which is not limited herein.

As shown in FIG. 2, the present application further provides a pet waste collection device. The pet waste collection device includes a connection rod 8 and the rolling support drive mechanism according to any one of the above embodiments. One end of the connection rod 8 is rotatably connected to the connection member 61, and another end of the connection rod 8 is rotatably connected to the grid 3. The connection rod 8 connects the rolling support assembly 6 and the grid 3, simplifying the transmission path of the drive device. Power is transmitted from the rolling support assembly 6 to the grid 3 through the connection rod 8, thereby achieving simple and efficient motion conversion. The rolling support assembly 6 is in rolling engagement with the bottom plate 5 of the cat litter box 1 through the lower rolling support member 62, so that the rolling support assembly 6 is supported. The contact between the lower rolling support member 62 and the bottom plate 5 of the cat litter box 1 is thereby changed from sliding friction to rolling friction, which significantly reduces the frictional force. This not only reduces the driving load and decreases energy consumption, but also makes the device operate more smoothly and extends the service life of various assemblies of the device, particularly by reducing wear on the drive components. Moreover, the introduction of the rolling support assembly 6 reduces frictional noise, thereby making the device quieter compared with drive mechanisms relying on sliding friction. Users are not disturbed by frictional sounds during daily use, thereby improving the usage experience of the user. The guide member 63 is provided so that the rolling support drive mechanism may reciprocate along a predetermined trajectory of the guide member 63 under the drive of the drive assembly 7. The guide member 63 may stably guide the rolling support drive mechanism to drive the grid 3 to reciprocate within the cat litter box 1, thereby making the reversing of the grid more flexible and rapid, avoiding jamming or deviation, and ensuring smooth operation of the device when switching between different directions.

## Claims

1. A rolling support drive mechanism, wherein each of two ends of a cat litter box (1) is provided with a waste collection bin (2), a grid (3) is located at a top end of the cat litter box (1) and is inserted into the cat litter box (1), upper limit plates (4) are respectively located outside two sides of the cat litter box (1), the rolling support drive mechanism is located between the upper limit plates (4) and a bottom plate (5) of the cat litter box (1) and is configured to drive the grid (3) to reciprocate between waste collection bins (2) at the two ends of the cat litter box (1), and the rolling support drive mechanism comprises:
- rolling support assemblies (6) symmetrically distributed on the two sides of the cat litter box (1), wherein a rolling support assembly (6) of the rolling support assemblies (6) comprises a connection member (61), a lower rolling support member (62), and a guide member (63), the lower rolling support member (62) is disposed at a bottom end of the connection member (61) and is in rolling engagement with the bottom plate (5), guide members (63) are symmetrically arranged along the two sides of the cat litter box (1), the guide member (63) is connected to the connection member (61), and the guide members (63) are configured to guide the rolling support assemblies (6) to reciprocate along the two sides of the cat litter box (1); and
- drive assemblies (7), wherein output ends of the drive assemblies (7) are connected to the rolling support assemblies (6) to drive rolling support assemblies to reciprocate along the two sides of the cat litter box (1).

2. The rolling support drive mechanism of claim 1, wherein the lower rolling support member (62) comprises a roller (621), a protrusion (611) is disposed on the connection member (61), the roller (621) is rotatably sleeved on the protrusion (611), the roller (621) is configured to be in rolling engagement with the bottom plate (5), and rollers (621) are configured to reciprocate along the two sides of the cat litter box (1).

3. The rolling support drive mechanism of claim 2, wherein the lower rolling support member (62) further comprises a retainer ring (622), and the retainer ring (622) is disposed at an end of the protrusion (611) facing away from the connection member (61) to prevent the roller (621) from slipping off.

4. The rolling support drive mechanism of claim 1, wherein the guide member (63) comprises a guide rod (631), guide rods (631) are symmetrically disposed outside the two sides of the cat litter box (1), and the guide rod (631) is configured to pass through the connection member (61) and is slidably connected to the connection member (61).

5. The rolling support drive mechanism of claim 1, wherein the guide member (63) comprises a guide rail (632), guide rails (632) are symmetrically disposed at a bottom of the cat litter box (1) along outside of the two sides of the cat litter box (1), and the lower rolling support member (62) is configured to roll along the guide rail (632).

6. The rolling support drive mechanism of any one of claims 1 to 5, wherein the rolling support assembly further comprises an upper rolling support member (64), and the upper rolling support member (64) is disposed at a top end of the connection member (61) and is in sliding engagement with a respective upper limit plate (4) of the upper limit plates (4).

7. The rolling support drive mechanism of claim 6, wherein the rolling support assembly further comprises an auxiliary support member (65), and the auxiliary support member (65) is disposed between the upper rolling support member (64) and the lower rolling support member (62) and is connected to a side wall of the cat litter box (1) and the connection member (61), to share a load of the lower rolling support member (62).

8. The rolling support drive mechanism of claim 7, wherein the auxiliary support member (65) comprises a support protrusion, the support protrusion is disposed on one of the side wall of the cat litter box (1) and the connection member (61) and is disposed along a direction of reciprocation of the rolling support assembly (6), a support groove is disposed on another of the side wall of the cat litter box (1) and the connection member (61), and the support protrusion is in sliding engagement with the support groove.

9. The rolling support drive mechanism of claim 1, wherein a drive assembly (7) of the drive assemblies (7) comprises a drive motor (71) and a transmission member (72), an output end of the drive motor (71) is connected to the transmission member (72), and the transmission member (72) is connected to the connection member (61) to drive the rolling support assembly (6) to reciprocate along the two sides of the cat litter box (1).

10. A pet waste collection device, comprising a connection rod (8) and the rolling support drive mechanism of any one of claims 1 to 9, wherein one end of the connection rod (8) is rotatably connected to the connection member (61), and another end of the connection rod (8) is rotatably connected to the grid (3).
